# EUROPÄISCHE PATENTSCHRIFT

(11) **EP 0 635 645 B1**
(45) Veröffentlichungstag und Bekanntmachung des Hinweises auf die Patenterteilung: **29.03.2000**
(21) Anmeldenummer: 94110502.5
(22) Anmeldetag: 06.07.1994
(51) Int. Cl.: F16B 13/08, B25B 31/00

(54) **Dübel**
Dowell
Douille

(30) Priorität: 07.07.1993 DE 4322588
(43) Veröffentlichungstag der Anmeldung: 25.01.1995
(73) Patentinhaber: MKT METALL-KUNSTSTOFF-TECHNIK GmbH & Co. KG., D-67685 Weilerbach (DE)
(72) Erfinder: Warnke, Hans, D-67686 Mackenbach (DE); Nasshan, Theo, D-66879 Steinwenden (DE); Weustenhagen, Lore, D-67686 Mackenbach (DE)
(74) Vertreter: Patentanwälte Ruff, Beier, Schöndorf und Mütschele

(56) Entgegenhaltungen:
- EP-A- 0 331 816
- WO-A-89/02036
- DE-A- 1 902 066
- FR-A- 1 327 039
- FR-A- 2 289 789

## Beschreibung

Die Erfindung betrifft einen Dübel mit einer Dübelhülse und einem Aufweitkörper.

Diese Dübel, die auch Schwerlastanker genannt werden, werden mit Hilfe eines Setzwerkzeugs gesetzt. Das Setzwerkzeug dient dazu, die Aufspreizung der Dübelhülse durch eine Relativbewegung zwischen dem Konus und der Hülse zu bewirken. Gleichzeitig wird durch die Längsverschiebung der Hülse ein Hinterschnitt geschaffen.

Es ist bereits ein Schlaganker bekannt, dessen als Hülse ausgebildeter Schaft in einen Schlitzbereich mit mehreren Spreizschenkeln übergeht. Die Spreizschenkel sind über einen eintreibbaren Spreizkörper aufweitbar. Der Spreizkörper enthält an seinen nach vorne gerichteten Ende einen nach außen verformbaren Kragen, der beim Einschlagen des Ankers mit Hilfe eines Setzwerkzeugs zu einem Ringwulst verformt wird (WO-A-89/02036).

Weiterhin ist ein Schlagspreizdübel bekannt, der eine Hülse aufweist, die in ihrem Inneren in das Bohrloch gerichteten Ende aufspreizbar ist. Sie wird aufgespreizt mit Hilfe eines Aufspreizkörpers, der einen Schaft mit einer Rastprofilierung aufweist, die in eine entsprechende Rastprofilierung der Innenbohrung der Spreizhülse eingreift.

Der Erfindung liegt die Aufgabe zugrunde, einen Dübel dieser Art zu schaffen, der erhöhte Auszugskräfte aufweist.

Zur Lösung dieser Aufgabe schlägt die Erfindung einen Dübel mit den Merkmalen des Anspruchs 1 vor.

Der Dübel wird in der üblichen Weise verwendet. Es wird vorzugsweise mit Hilfe eines Bundbohrers ein Dübelloch definierter, auf den Dübel abgestimmter Tiefe gebohrt. Der Dübel wird in das Bohrloch gesteckt und mit Hilfe eines Setzwerkzeugs gesetzt. Das Setzwerkzeug führt zu einem Verschieben der Dübelhülse gegenüber dem Aufweitkörper, der auf dem Boden des Lochs aufsitzt und sich axial nicht bewegen kann. Sobald die Aufweitung im wesentlichen vollständig erfolgt ist, was zu einer entsprechenden Relativbewegung von Hülse und Aufweitkörper führt, gelangt der Aufweitkörper in die axiale Stellung, in der die Verriegelung zwischen ihm und der Hülse erfolgt. Bei einer Belastung der Hülse in Auszugsrichtung kann diese sich gegenüber dem Aufweitkörper nicht mehr axial bewegen, so daß selbst bei sehr großen Belastungen der Dübel hält.

Die Verriegelungseinrichtung kann beispielsweise von einem oder mehreren Vorsprüngen gebildet werden, der bei Erreichen der Schulter hinter diese greift. Hier wird die Festlegung durch das Setzen allein erreicht.

Die Erfindung schlägt in Weiterbildung vor, daß der Eingriff zwischen der Verriegelungseinrichtung und der Schulter durch Verformen der Verriegelungseinrichtung hergestellt werden kann, wobei diese Verformung entweder im Endbereich des Setzens der Dübelhülse oder aber nach dem Setzen der Dübelhülse in einem getrennten Arbeitsgang herstellbar ist.

Zur Herstellung der Verriegelung kann ein bleibendes Verformen der Verriegelungseinrichtung dienen. Diese Verformung kann vorteilhafterweise in einem Arbeitsgang mit dem Setzen der Dübelhülse erfolgen.

Die Erfindung schlägt in Weiterbildung vor, daß der Aufweitkörper als getrenntes Element hergestellt und zur Vorkonfektionierung des Dübels mit dessen Aufweitbereich verbindbar ist. Dies kann beispielsweise durch einen gewissen Kraftschluß folgen, ohne daß damit schon eine Aufweitung des Aufweitbereiches der Dübelhülse gegeben zu sein braucht. Ebenfalls möglich ist es, den Aufweitkörper nur einfach einzustecken und mit Hilfe eines Klebepunktes o.dgl. festzulegen.

Besonders günstig ist es jedoch, wenn der Dübel einstückig ausgebildet ist und der Aufweitkörper über eine Sollbruchstelle mit der Hülse verbunden ist. Diese Sollbruchstelle wird dann beim Setzen des Dübels abgeschert, so daß dann der Aufweitkörper seine Funktion durch Relativverschiebung gegenüber der Dübelhülse erfüllen kann.

Der Dübel kann mit einem üblichen Setzwerkzeug gesetzt werden.

Weitere Merkmale, Einzelheiten und Vorzüge ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: einen Längsschnitt durch einen Dübel;
- Fig. 2: einen der Fig. 1 entsprechenden Längsschnitt eines zweiten Dübels
- Fig. 3: schematisch einen dritten Dübel;

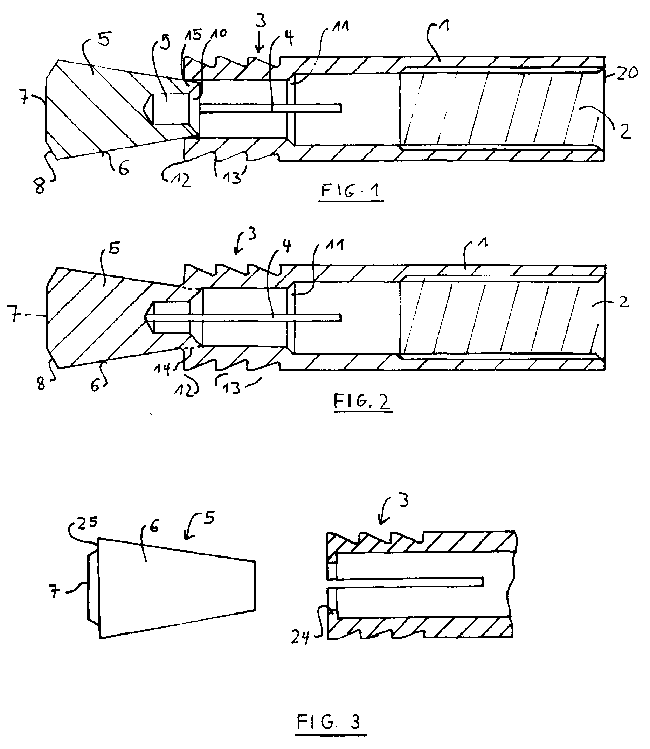

Die in den Figuren 1 bis 2 dargestellten Dübel fallen nicht unter den Schutzbereich der Patentansprüche, dienen aber der Erläuterung von Merkmalen der Unteransprüche.

Der in Fig. 1 dargestellte Dübel enthält eine Dübelhülse 1, die in ihrem zur Außenseite der Wand gerichteten vorderen Endbereich ein Innengewinde 2 aufweist. In dieses Innengewinde kann bei fertigmontiertem Dübel eine Schraube oder ein Schraubbolzen eingeschraubt werden.

In dem gegenüberliegenden, in das Innere des Bohrlochs gerichteten Endbereich weist die Dübelhülse 1 einen Aufweitbereich 3 auf. Die Aufweitung der Hpülse in diesem Aufweitbereich 3 wird durch in Längsrichtung verlaufende, von dem freien Ende ausgehende Schlitzen 4 ermöglicht. Von diesen Schlitzen sind beispielsweise vier über den Umfang verteilt vorgesehen.

Dem Aufweitbereich 3 der Dübelhülse zugeordnet ist ein Aufweitkörper 5, der im wesentlichen die Form eines Kegelstumpfes aufweist. Seine Außenseite bildet also eine Kegelfläche 6, die dem Aufweitbereich zugeordnet und zugewandt ist. Es muß sich dabei nicht um eine exakte Kegelfläche handeln, die Fläche kann statt dessen auch geschweift oder gebogen verlaufen.

Der Aufweitkörper 5 ist etwas in den Aufweitbereich 3 hineingesteckt, wo er reibschlüssig festgehalten wird. Es wäre auch möglich, ihn hier festzukleben.

Der Aufweitkörper weist eine der Dübelhülse abgewandte Endfläche 7 auf, die im wesentlichen eben verläuft und einen leicht abfallenden Randbereich 8 aufweist. Auf der gegenüberliegenden, zur Vorderseite der Dübelhülse hin gewandten Stirnseite enthält der Aufweitkörper eine Ausnehmung 9 in Form einer Sacklochbohrung, wobei die Mündung 10 der Ausnehmung 9 angefast ist.

Der Innendurchmesser der Dübelhülse 1 im Aufweitbereich 3 ist etwas kleiner als ihr Innendurchmesser im übrigen Bereich. Im Übergang zwischen den beiden unterschiedlichen Durchmessern wird dadurch eine Schulter 11 gebildet, die schräg verläuft. Die Schulter 11 ist im vorderen Bereich des Aufweitbereiches 3 gebildet.

Die hintere Außenkante 12 des Aufweitbereichs 3 weist einen spitzen Winkel auf. Der Aufweitbereich 3 weist insgesamt drei umlaufende Nuten 13 auf, die so geformt sind, daß sich im Schnitt ein Sägezahnprofil ergibt.

Bevor die Funktion des in Fig. 1 dargestellten Dübels erläutert wird, wird zunächst die abgeänderte Form nach Fig. 2 beschrieben. Hierbei werden die gleichen Bezugszeichen verwendet. Während bei dem Dübel nach Fig. 1 der Aufweitkörper 5 ein getrenntes Bauteil ist, ist bei dem Dübel nach Fig. 2 der Aufweitkörper 7 einstückig mit der Dübelhülse 1 ausgebildet. Er ist mit dieser über eine Sollbruchstelle 14 verbunden, deren ungefährer Verlauf gestrichelt eingezeichnet ist. Die Sollbruchstelle wird von der in Axialrichtung schmalen Verbindungsstelle zwischen dem Aufweitbereich 3 und dem vorderen Bereich des Aufweitkörpers 5 gebildet.

Die Wirkung des in den Fig. 1 und 2 dargestellten Dübels ist die folgende. Der Dübel wird in der dargestellten Weise in eine Bohrung eingesetzt, bis die vordere Endfläche 7 des Aufweitkörpers 5 auf dem Boden des Sacklochs aufsitzt. Das Loch kann beispielsweise mit einem Bundbohrer hergestellt werden. Dann erfolgt eine Verschiebung der Dübelhülse 1, beispielsweise mit Hilfe eines Setzwerkzeugs. Die Dübelhülse wird in dem Bohrloch gegenüber dem stehenbleibendem Aufweitkörper 5 verschoben. Bei dem Dübel nach Fig. 1 geht dies ohne weiteres, da der Aufweitkörper 5 mit der Dübelhülse 1 allenfalls kraftschlüssig verbunden ist. Bei dem Dübel nach Fig. 2 erfolgt bei einer Belastung der Dübelhülse in das Innere des Dübellochs hinein ein Abscheren des Aufweitkörpers 5 an der erwähnten Sollbruchstelle 14, so daß sich der Aufweitkörper löst und dann genauso verhält wie der Aufweitkörper 5 bei dem Dübel nach Fig. 1. Die Dübelhülse 1 wird um einen definierten Betrag nach vorne geschoben, bis die Vorderseite des Aufweitkörpers 5 bis über die Schulter 11 axial vorspringt. Bei einer bekannten Geometrie läßt sich messen, ob die Dübelhülse weit genug vorgeschoben wurde. Bei korrekter Positionierung kann dann ein Verformen des über die Schulter 11 vorstehenden Teils des Randbereichs des Aufweitkörpers 5 außerhalb der Ausnehmung 9 erfolgen, so daß dieser Randbereich 15 sich an die Schulter 11 legt und dadurch eine Verriegelung zwischen Aufweitbereich bzw. Dübelhülse und Aufweitkörper 5 gegeben ist.

Das Verformen des Randbereichs 15 nach außen kann mit Hilfe eines Werkzeugs erfolgen, das eine sich verjüngende Spitze aufweist, wobei die Abfasung der Mündung 10 nicht einmal erforderlich ist. Das Verformen nach außen kann in ähnlicher Weise wie ein Nietvorgang durchgeführt werden.

Wahrend bei den bisher abgehandelten Beispielen die Verriegelung durch eine Verformung eines Teils des Aufweitkörpers durchgeführt wurde, zeigt Fig. 3 eine Möglichkeit, wie die Verriegelung ohne seine Verformung durchgeführt werden kann. Bei der Ausführungsform der Fig. 3 ist am Endbereich des Aufweitbereichs 3 ein nach innen gerichteter Vorsprung 24 gebildet, der an Ende der Aufweitbewegung hinter die an der Rückfläche 7 des Aufweitkörpers 6 gebildete Schulter 25 greift, wobei hier wieder eine gewisse elastische Zurückverformung des Aufweitbereichs 3 der Dübelhülse 1 erfolgt. Diese erfolgt aber an der am wenigstens aufgeweiteten Stelle, so daß sich dies für die Haltekraft des Dübels nicht auswirkt.

## Patentansprüche

1. Dübel mit
einem Aufweitkörper (5), der
eine Kegelfläche (6) und
im Bereich seines breiteren Endes eine an der Rückfläche (7) des Aufweitkörpers (5) gebildete Schulter (25) aufweist, sowie mit
einer Dübelhülse (1), die
im Bereich ihres dem Aufweitkörper (5) zugewandten Endes einen mit dessen Kegelfläche (6) zusammenwirkenden Aufweitbereich (3) und
eine im aufgeweiteten Zustand mit dessen Schulter (25) zur Verriegelung des Dübels in Eingriff bringbare Ausbildung aufweist.

2. Dübel nach Anspruch 1, bei dem die Verriegelungsausbildung von einem vorzugsweise umlaufenden Vorsprung (24) gebildet wird, der bei Erreichen der Schulter (25) hinter diese greift.

3. Dübel nach einem der vorhergehenden Ansprüche, bei dem der Eingriff des Vorsprungs (24) hinter die Schulter (25) durch Verformen der Verriegelungsausbildung gegen Ende des Setzens der Dübelhülse herstellbar ist.

4. Dübel nach Anspruch 3, bei dem das Verformen in einem Arbeitsgang mit dem Setzen erfolgt.

5. Dübel nach einem der vorhergehenden Ansprüche, bei dem der Aufweitkörper (5) als getrenntes Element hergestellt und der Dübel mit dem in dem Aufweitbereich (3) der Dübelhülse (1) gehalterten Aufweitkörper (5) geliefert wird.

6. Dübel nach einem der Ansprüche 1 bis 4, bei dem der Dübel einstückig ausgebildet ist und der Aufweitkörper (5) über eine Sollbruchstelle (14) mit der Dübelhülse (1) verbunden ist.

## Claims

1. Dowel with an expanding member (5), which has a conical surface (6) and, in the vicinity of its wider end, a shoulder (25) formed on the back surface (7) of the expanding member (5), as well as with a dowel sleeve (1), which in the vicinity of its end facing the expanding member (5) has an expanding area (3) cooperating with its conical surface (6) and a construction which can be engaged with the shoulder (25) in the expanded state for locking the dowel.

2. Dowel according to claim 1, wherein the locking construction is formed by a preferably circumferential projection (24), which on reaching the shoulder (25) engages behind the latter.

3. Dowel according to one of the preceding claims, wherein the engagement of the projection (24) behind the shoulder (25) can be brought about by deforming the locking construction towards the end of the putting into place of the dowel sleeve.

4. Dowel according to claim 3, wherein deformation takes place in a single operation with the putting into place.

5. Dowel according to one of the preceding claims, wherein the expanding member (5) is produced as a separate element and the dowel is supplied with the expanding member (5) secured in the expanding area (3) of the dowel sleeve (1).

6. Dowel according to one of the claims 1 to 4, wherein the dowel is constructed in one piece and the expanding member (5) is connected to the dowel sleeve (1) by means of a preset breaking point (14).

## Revendications

1. Cheville comprenant un corps d'écartement (5) qui présente une surface conique (6) et dans la zone de son extrémité la plus large un épaulement (25) formée sur la surface arrière (7) du corps d'écartement (5) et comprenant également une gaine de cheville (1) qui présente dans la zone de son extrémité tournée vers le corps d'écartement (5) une zone d'écartement coopérant avec la surface conique (6) de ce dernier et un dispositif venant en prise à l'état écarté avec l'épaulement (25) de la cheville (1) en vue du verrouillage de cette dernière.

2. cheville selon la revendication 1, selon laquelle le dispositif de verrouillage est constitué par une saille (24) de préférence circulaire qui entre en contact avec l'épaulement (25) par l'arrière.

3. Cheville selon l'une des revendications précédentes, selon laquelle l'engagement de la saille (24) derrière l'épaulement (25) est réalisable par déformation du dispositif de verrouillage en fin de mise en place de la gaine de cheville.

4. Cheville selon la revendication 3, selon laquelle la déformation s'effectue en une étape de travail en même temps que la mise en place.

5. Cheville selon l'une des revendications précédentes, selon la quelle le corps d'élargissement (5) est fabriqué comme un élément séparé et que la cheville est fournie avec le corps d'écartement (5) maintenu dans la zone d'écartement (3) de la gaine de cheville (1).

6. Cheville selon l'une des revendications 1 à 4, selon laquelle la cheville est réalisée d'une seule pièce et le corps d'écartement (5) est relié par un point de rupture obligatoire (14) à la gaine de cheville (1).
